# EUROPEAN PATENT APPLICATION

(11) **EP 2 677 157 A1**
(43) Date of publication of application: **25.12.2013**
(21) Application number: 13172479.1
(22) Date of filing: 18.06.2013
(51) Int. Cl.: F02M 55/02, F02M 63/02

(54) **Variable volume common rail**

(30) Priority: 21.06.2012 IN CH24622012
(71) Applicant: ROBERT BOSCH GMBH, 70442 Stuttgart (DE)
(72) Inventor: Ss, Sajith, 641006 Tamilnadu (IN); Thangavelu, Kanagaraj, 641047 Tamil Nadu (IN)

(57) **Abstract**

The present invention discloses a fuel rail (2) for a fuel injection system. The fuel rail (2) in accordance with the present invention includes a fixed volume chamber (2a) and a variable volume chamber (2b) which are fluidly connected to each other. The volume of the variable volume chamber (2b) is adjusted based on the engine (3) operating conditions and the rail pressure. The volume of the variable volume chamber (2b) is varied by means of a plunger (8) assembly the position of which is controlled by a control unit (6).

## Description

### Field of the invention:

The present invention relates to common rail fuel injection systems.

### Background of the invention:

It is a need of the day to have vehicles with engine which have higher fuel economy and lesser emissions to improve the engine efficiency. To achieve lower fuel consumption, reduction in emissions and improved engine efficiency the fuel needs to be injected at high pressure so that it can be atomized and combustion can be complete. Presently common rail fuel injection systems are used for injecting fuel at high pressure constantly.

The common rail of the presently available systems is typically fed with fuel by a high pressure fuel pump. The high pressure fuel pump is driven by the engine. As a result during the start of the engine until the engine rpm has reached a minimum threshold value, the pump also operates at a lower rpm. As the pump does not operate at the desired rpm, sufficient fuel rail is not supplied to the fuel rail and thus it takes more time to reach the required pressure.

US5845623 discloses a variable volume chamber for an injector for a common rail system for preventing leakage from the injector.

Thus, there is a need for a device which helps to achieve the desired rail pressure faster as compared to the presently available systems.

### Brief description of the invention:

The present invention discloses a common rail for a fuel injection system. The common rail in accordance with the present invention includes a fixed volume chamber and a variable volume chamber which are fluidly connected to each other. The volume of the variable volume chamber is adjusted based on the engine operating conditions and the rail pressure. The volume of the variable volume chamber is varied by means of a plunger assembly the position of which is controlled by a control unit.

It is an object of the invention to achieve the required pressure in the fuel rail at an early stage when the engine is being started and is operating at a low rpm. Further it is another object of the invention to have better control over the pressure of the fuel rail by controlling the volume of the rail.

Also the present invention helps in reducing the back pressure on the fuel rail and the pump supplying fuel to the rail. Example, the volume of the rail can be increased to reduce the rail pressure when there is a sudden reduction in engine speed.

### Brief description of the drawing:

The present invention is hereafter described with reference to the following accompanying drawing,

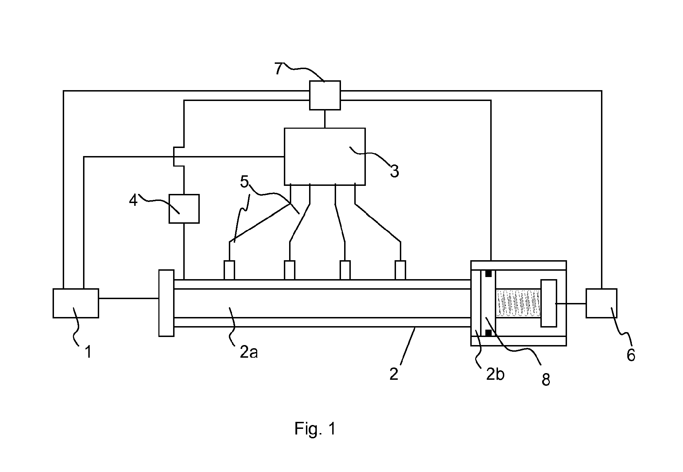

Fig. 1 illustrates a schematic diagram of a common rail and fuel injection system using the common rail in accordance with the present invention.

### Detailed description of the drawing:

Fig. 1 illustrates a common rail (2) and fuel injection system using the common rail (2) in accordance with the present invention. A fuel pump (1) is adapted to pump pressurized fuel to a fuel rail (2). The fuel rail (2) is adapted to receive the pressurized fuel from the pump (1) and store the pressurized fuel for injecting to an engine (3). The fuel rail (2) includes a fixed volume chamber (2a) and a variable volume chamber (2b) which are in fluid connection with each other. A pressure sensor (4) is provided to the fuel rail (2) to measure the rail pressure. A plurality of fuel injectors (5) are fluidly connected to the fuel rail (2) and adapted to receive pressurized fuel from the fuel rail (2) for injecting in the engine (3). A control unit (6) receives the engine operating conditions from an engine control unit (7) and rail pressure from the pressure sensor (4). The control unit (6) varies the effective volume of said variable volume chamber (2b) based on engine operating conditions and rail pressure. The variable volume chamber (2b) includes a movable plunger assembly. As the plunger (8) moves the volume of the variable volume chamber (2b) changes. The control unit (6) controls the position of the plunger (8) to control the effective rail volume. The volume of the fuel rail (2) can be changed dynamically based on the rail pressure sensor (4) and the engine control unit (7) signal. Varying the volume of the rail (2) by moving plunger (8) helps to achieve the required pressure early and backpressure to the pump (1) can be eliminated significantly.

The volume of the fuel rail (2) can be reduced at the initial start of the engine (3) when the rpm of the engine (3) is lower. This helps to reach the required pressure of fuel rail (2) faster even when the rpm is lower. Plunger (8) is moved to normal position once engine (3) reaches to a particular stable rpm value.

The volume of the fuel rail (2) can be increased using plunger movement, so that pressure will be reduced due to increase in area. Thus the pump (1) and fuel rail (2) are protected from higher pressure and back pressure.

In accordance with one embodiment of the invention the plunger (8) of the variable volume chamber (2b) is driven by a solenoid. The solenoid based on it activation is adapted to move the piston to and fro.

In accordance with another embodiment of the invention the plunger (8) of the variable volume chamber (2b) is driven by a hydraulically actuated piston.

In accordance with yet another embodiment of the invention the plunger (8) of the variable volume chamber (2b) is driven by a pneumatic screw.

In accordance with a further embodiment of the invention the plunger (8) of the variable volume chamber (2b) is driven by an electrically driven screw. This is an accurate but an expensive arrangement to control the position of the plunger (8).

The mechanism in accordance with the present invention makes the common rail (2) system more dynamic for the various operating situation.

## Claims

1. A common fuel rail (2) for a fuel injection system comprising,
a fixed volume chamber (2a); and
a variable volume chamber (2b) fluidly connected to said fixed volume chamber (2a).

2. A common rail as claimed in claim (1) wherein, said variable volume chamber (2b) is a plunger assembly (8) fluidly connected to said fixed volume chamber (2a).

3. A common rail as claimed in claims (1) and (2) wherein, said plunger assembly includes a plunger (8) adapted to move to and fro and vary the effective volume of said fuel rail (2).

4. A common rail as claimed in claims (1) and (2) wherein, position of said plunger (8) is controlled by a control unit (6) based on engine operating conditions.

5. A common rail as claimed in claims (1), (2) and (4), wherein said control unit (6) is adapted to control position of said plunger (8) based on a rail pressure sensor (4) and engine operating conditions received from an engine control unit (7).

6. A common rail as claimed in claims (1) and (2) wherein, said plunger (8) is driven by hydraulic means.

7. A common rail as claimed in claims (1) and (2) wherein, said plunger (8) is driven by pneumatic means.

8. A common rail as claimed in claims (1) and (2) wherein, said plunger (8) is driven by electrical drive means.

9. A common rail as claimed in claims (1) and (2) wherein, said plunger (8) is
driven by a solenoid.

10. A common rail fuel injection system comprising,
a fuel pump (1) adapted to pump pressurized fuel;
a fuel rail (2) adapted to receive said pressurized fuel from said pump (1) and store said pressurized fuel for injecting to an engine (3), said fuel rail (2) including a fixed volume chamber (2a) and a variable volume chamber (2b);
a pressure sensor (4) adapted to measure the rail pressure;
a plurality of fuel injectors (5) fluidly connected to said fuel rail (2) and adapted to receive pressurized fuel from said fuel rail (2) for injecting in said engine (3);
a control unit (6) adapted receive engine (3) operating conditions from an engine control unit (7) and rail pressure from said pressure sensor (4), and vary the effective volume of said variable volume chamber (2b).

11. A common rail fuel injection system as claimed in claim (10) wherein said
variable volume chamber (2b) is a plunger assembly fluidly connected to said fixed volume chamber (2a).

12. A common rail fuel injection system as claimed in claim (10) wherein said
plunger assembly includes a plunger (8) adapted to move to and fro and vary the effective volume of said fuel rail (2).

13. A common rail fuel injection system as claimed in claim (10) wherein
position of said plunger (8) of said variable volume chamber (2b) determines the effective volume and hence pressure of said fuel rail.
